# EUROPEAN PATENT APPLICATION

(11) **EP 1 621 975 A2**
(43) Date of publication of application: **01.02.2006**
(21) Application number: 05254815.3
(22) Date of filing: 01.08.2005
(51) Int. Cl.: G06F 3/023

(54) **Input device capable of providing input to an electronic device, and method of manufacturing same**

(30) Priority: 30.07.2004 US 903839
(71) Applicant: Belkin Corporation, Compton, CA 90220 (US)
(72) Inventor: Mori, Kenneth, Los Angeles CA 90065 (US); Wadsworth, John, Los Angeles CA 91127 (US)
(74) Representative: Lawrence, John

(57) **Abstract**

An input device capable of providing input to an electronic device includes a charging base (110) and a wireless keyboard (120) capable of being removably coupled to the charging base. The charging base includes a first portion (111) for receiving the wireless keyboard, a second portion (112) adjacent to the first portion and having at least a first key (113), and a first charging contact (114) adjacent to the first portion. The wireless keyboard includes a second charging contact (305) capable of being physically and electrically coupled to the first charging contact, a plurality of keyboard keys (122), and a switch (123) capable of alternately placing the wireless keyboard in a first mode, where the wireless keyboard influences the electronic device in a first manner, and in a second mode, where the wireless keyboard influences the electronic device in a second manner.

## Description

### FIELD OF THE INVENTION

This invention relates generally to control systems for electronic devices, and relates more particularly to wireless input devices capable of communicating with electronic devices.

### BACKGROUND OF THE INVENTION

Consumer electronic equipment has for many years been an increasingly common feature of the home and office environment. Advances in technology have led to a growing integration among consumer electronic devices of all kinds, including especially an integration among personal computers and audio visual or home entertainment devices such as televisions, DVD, video, and CD players, tape decks, radios and tuners, and the like. The advance of technology has also made possible wireless input devices or control systems for the foregoing electronic devices, enabling a greater degree of freedom for the user of such devices.

In spite of the advances referred to above, or in some cases as a result of them, the control of and interaction with the various consumer electronic devices can be rather cumbersome. Wireless input devices, for example, are powered by batteries that must either be replaced or recharged, and many of the existing rechargeable input devices do not allow the device to be used during the recharging period. Furthermore, input devices for certain device families are not compatible with certain other device families, leading to an undesirable proliferation of input devices. Accordingly, there exists a need for a more fully universal input device that can be used even while being recharged.

### BRIEF DESCRIPTION OF THE DRAWINGS

The invention will be better understood from a reading of the following detailed description, taken in conjunction with the accompanying figures in the drawings in which:
FIG. 1 is a perspective view of an input device capable of providing input to an electronic device according to an embodiment of the invention;
FIG. 2 is a plan view of a wireless keyboard according to an embodiment of the invention;
FIG. 3 is a perspective view of a bottom surface of the wireless keyboard according to an embodiment of the invention; and
FIG. 4 is a flow chart illustrating a method of manufacturing an input device capable of providing input to an electronic device, according to an embodiment of the invention.

For simplicity and clarity of illustration, the drawing figures illustrate the general manner of construction, and descriptions and details of well-known features and techniques may be omitted to avoid unnecessarily obscuring the invention. Additionally, elements in the drawing figures are not necessarily drawn to scale. For example, the dimensions of some of the elements in the figures may be exaggerated relative to other elements to help improve understanding of embodiments of the present invention. The same reference numerals in different figures denote the same elements.

The terms "first," "second," "third," "fourth," and the like in the description and in the claims, if any, are used for distinguishing between similar elements and not necessarily for describing a particular sequential or chronological order. It is to be understood that the terms so used are interchangeable under appropriate circumstances such that the embodiments of the invention described herein are, for example, capable of operation in sequences other than those illustrated or otherwise described herein. Furthermore, the terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

The terms "left," "right," "front," "back," "top," "bottom," "over," "under," and the like in the description and in the claims, if any, are used for descriptive purposes and not necessarily for describing permanent relative positions. It is to be understood that the terms so used are interchangeable under appropriate circumstances such that the embodiments of the invention described herein are, for example, capable of operation in other orientations than those illustrated or otherwise described herein. The term "coupled," as used herein, is defined as directly or indirectly connected in an electrical, mechanical, or other manner.

### DETAILED DESCRIPTION OF THE DRAWINGS

In one embodiment of the invention, an input device capable of providing input to an electronic device comprises a charging base and a wireless keyboard capable of being removably coupled to the charging base. The charging base comprises a first portion for receiving the wireless keyboard, a second portion adjacent to the first portion and comprising at least a first key, and a first charging contact adjacent to the first portion. The wireless keyboard comprises a second charging contact capable of being physically and electrically coupled to the first charging contact, a plurality of keyboard keys, and a switch capable of alternately placing the wireless keyboard in a first mode, where the wireless keyboard influences the electronic device in a first manner, and in a second mode, where the wireless keyboard influences the electronic device in a second manner.

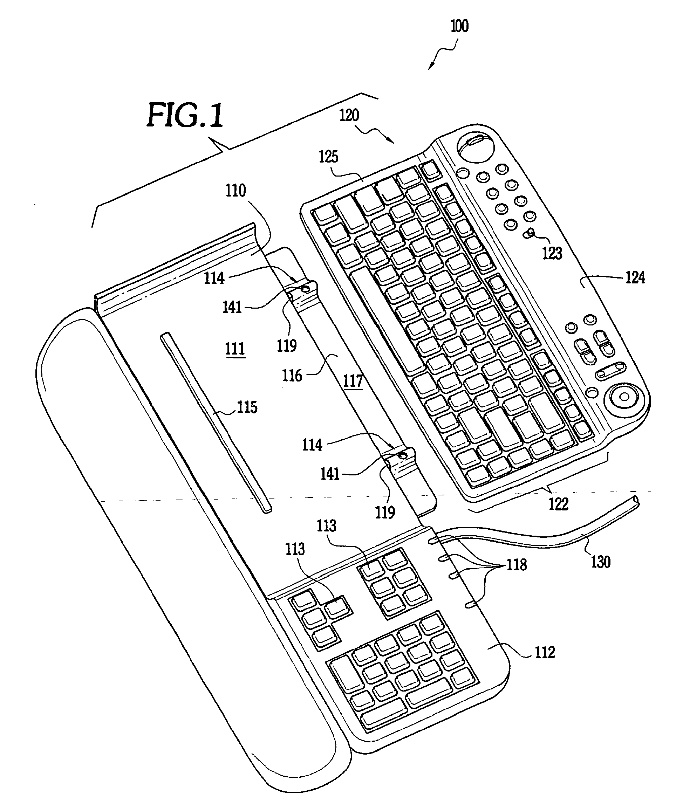

FIG. 1 is a perspective view of an input device 100 capable of providing input to one or more electronic devices (not shown), according to an embodiment of the invention. As an example, the electronic device can be a computer, an audio visual device such as a television, a DVD player, or a stereo, or a similar device. As illustrated in FIG. 1, input device 100 comprises a charging base 110 and a wireless keyboard 120 capable of being removably coupled to charging base 110. As an example of typical usage, charging base 110 may be placed in an accessible location such as on a computer desk or a tabletop where it is able to receive wireless keyboard 120. Wireless keyboard 120 may then either be coupled to charging base 110, and used while in that configuration, or used from a different location separate from charging base 110.

As further illustrated in FIG. 1, charging base 110 comprises a portion 111 for receiving wireless keyboard 120, a portion 112 adjacent to portion 111 and comprising a plurality of keys 113, a charging contact 114 adjacent to portion 111, and an electrical cable 130. In a first embodiment, electrical cable 130 is a cable capable of carrying both power and data, such as a universal serial bus (USB) cable or a Fire Wire cable. In a second embodiment, electrical cable 130 is a cable capable of carrying only electrical power. In this second embodiment, data could be transferred between charging base 110 and the electronic device via another wireless or wire-based link.

In the illustrated embodiment, two charging contacts 114 are present. Each of plurality of keys 113 is capable of generating a signal readable by at least one of the one or more electronic devices. In one embodiment, plurality of keys 113 can comprise one or more number keys, one or more navigation keys such as arrow keys and page up or page down keys, one or more mathematical operation keys, or the like. In a non-illustrated embodiment, portion 112 comprises only a single key, and in another non-illustrated embodiment portion, plurality of keys 113 are absent from portion 112. Electrical cable 130 extends from charging base 110 and includes a USB or other plug suitable for connection to a computer, an electrical outlet, or other source of electrical power. In the same or another non-illustrated embodiment, charging base 110 further comprises a friction pad or other high friction material at a lower surface of charging base 110. The high friction material serves to minimize movement of charging base 110, and to hold charging base 110 in place on the computer desk, table top, or other surface on which charging base 110 is placed.

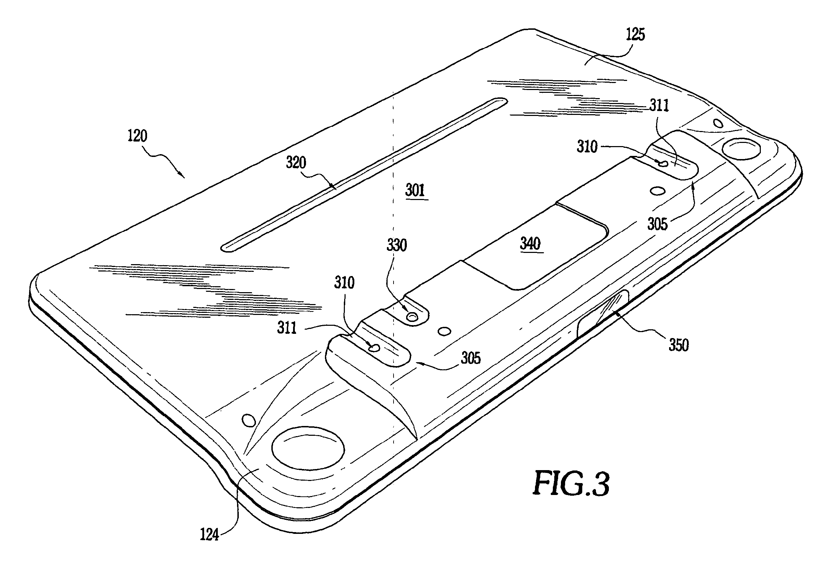

Wireless keyboard 120 comprises a charging contact (see FIG. 3) capable of being physically and electrically coupled to charging contact 114, a plurality of keyboard keys 122, each of which are capable of generating a signal readable by at least one of the one or more electronic devices, and a switch 123 capable of alternately placing wireless keyboard 120 in a first mode and in a second mode. As with a standard computer keyboard, each one of the plurality of keyboard keys 122 is associated with or assigned to at least one character, command, or other operation. Switch 123 can be a slide switch, a push-button switch, or any other switch capable of causing a shift between one mode and another. The first and second modes and the charging contacts will each be further discussed below.

Portion 111 of charging base I10 comprises a keyboard lock feature 115. In the illustrated embodiment, keyboard lock feature 115 comprises a convex ridge capable of cooperating with a corresponding concave portion (see FIG. 3) on wireless keyboard 120 such that any movement of wireless keyboard 120 with respect to charging base 110, while the two are coupled together, is minimized. Other types of keyboard lock features may also be used.

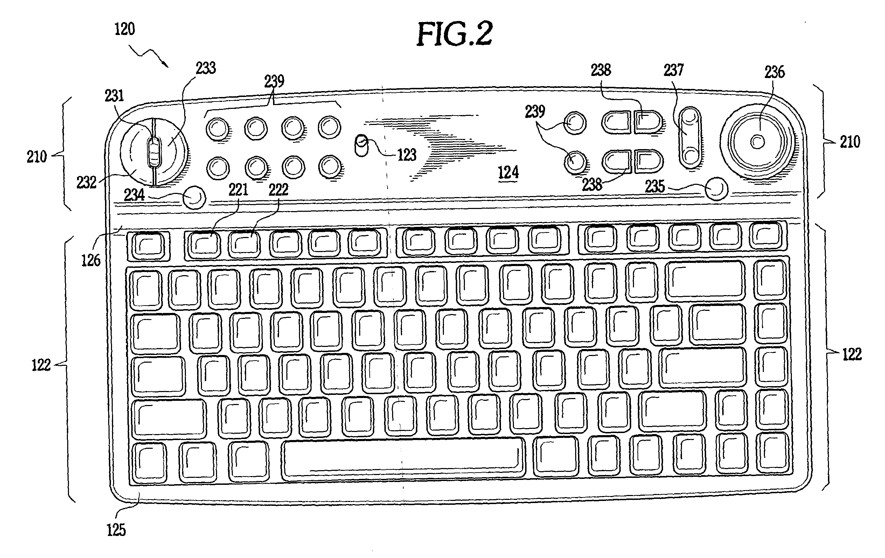

FIG. 2 is a plan view of an upper surface of wireless keyboard 120 according to an embodiment of the invention. As illustrated in FIG. 2, wireless keyboard 120 further comprises a plurality of buttons 210 capable of generating a signal readable by one or more of the one or more electronic devices. The signal generated by a particular one of plurality of buttons 210 influences the electronic device in a first manner when wireless keyboard 120 is in the first mode, also referred to herein as PC mode, and influences the electronic device in a second manner when wireless keyboard 120 is in the second mode, which is also referred to herein as AV mode. The names "PC mode" and "AV mode" are taken from an embodiment in which wireless keyboard 120 causes the electronic device to act like a computer when wireless keyboard 120 is in the first mode, and causes the electronic device to act like a piece of audio visual equipment when wireless keyboard 120 is in the second mode. Of course, because both computers and audio visual equipment perform such a wide variety of functions, the number of actions available within PC mode and AV mode will be quite large. A few particular examples are given below, but many other possibilities are not specifically discussed herein. It should be understood that other modes, possibly having other names, are also contemplated under this disclosure, and the mode names given here are not intended to limit in any way the type, number, or grouping of functions available within the first or the second mode.

Consider an embodiment in which the electronic device is a personal computer. In that embodiment, with wireless keyboard 120 in PC mode, actuating the particular one of plurality of buttons 210 may cause the computer to activate, for example, an email program, while actuating the same one of plurality of buttons 210 with wireless keyboard 120 in AV mode may cause the computer to activate, for example, a program for playing an audio CD.

Consider now an embodiment where input device 100 is capable of providing input to multiple electronic devices. Consider further that one such electronic device is a computer and that another such electronic device is a piece of audio visual equipment, also referred to as an audio visual device. In this embodiment, with wireless keyboard 120 in PC mode, actuating the particular one of plurality of buttons 210 causes a corresponding reaction from the computer. On the other hand, when wireless keyboard 120 is in AV mode, actuating the particular one of plurality of buttons 210 causes a corresponding reaction from the audio visual device. In a particular manifestation of this embodiment, actuating the particular one of plurality of buttons 210 while in PC mode creates a radio frequency (RF) signal that is transmitted, in a manner further described below, wirelessly from wireless keyboard 120 to charging base 110, and from charging base 110 to the computer. In the same particular manifestation, actuating the particular one of the plurality of buttons while in AV mode creates an infrared (IR) signal that is transmitted wirelessly from wireless keyboard 120 to the audio visual device. Thus, in at least one embodiment, wireless keyboard 120 communicates with a first electronic device via RF signals, and communicates with a second electronic device via IR signals. Both kinds of signals, RF and IR, may at times be referred to herein as "wireless" signals. Similarly, the communication between wireless keyboard 120 and the one or more electronic devices, and between wireless keyboard 120 and charging base 110, whether accomplished via RF or IR signals, may be referred to herein as "wireless" communication.

Two examples of the foregoing multiple-device-control concept will now be given, but it should be understood that the given examples are representative of a large number of possible examples, and are not intended to be limiting. As a first example, the particular one of plurality of buttons 210 may, in PC mode, cause the computer to send data to a printer, while the same button in AV mode may control a video cassette recorder. As a second example, the particular one or a different one of plurality of buttons 210, while in PC mode, may bring a folder, such as a "my computer" folder, into view on the computer monitor, while the same button in AV mode may control a television.

In a particular embodiment, at least one of plurality of buttons 210 influences the electronic device, in some fashion, when wireless keyboard 120 is in the second mode, and does not influence the electronic device when wireless keyboard 120 is in the first mode. Such a button may be, for example, a power button that turns the audio visual device on or off but that does not turn the computer on or off or affect the computer in any other way.

From the foregoing description it may be seen that wireless keyboard 120 provides a number of options for controlling electronic equipment. For example, wireless keyboard 120 may be used at a computer desk for purposes of controlling a computer, but, although placing wireless keyboard 120 on the computer desk is an option, wireless keyboard 120 can also be removed from the desk and used on a different surface, including the user's lap, if desired. Such flexibility allows greater comfort and convenience for the computer user. As further discussed below, wireless keyboard 120 includes not only the standard letter, number, and navigation and formatting keys found on traditional keyboards, but also includes keys or buttons that provide functionality not normally found on a keyboard, such as mouse buttons, a scroll wheel, speaker volume controls, and the like. The result is a keyboard that provides true remote control capability for a computer, without requiring a user to return to the computer desk whenever mouse functions or other non-traditional keyboard functions are to be performed.

Input device 100 may also be used as a control system for an entertainment center containing audio visual equipment such as DVD players, televisions, tuners, tape decks, CD players, video cassette recorders, and the like. As an example, wireless keyboard 120 may be taken from a computer desk to a couch, an easy chair, or other location from which the audio visual equipment are to be viewed, and used to control such audio visual equipment. As an example, wireless keyboard 120 can turn such equipment on or off, can fast-forward or rewind a video, can control volume, can skip through tracks on an audio CD, can access and manipulate the menu of a DVD, and perform many other functions. In one embodiment, wireless keyboard 120 acts as a "learning remote control," meaning that information necessary to control a particular audio visual device may be transferred directly to wireless keyboard 120 via an IR or other link, thus obviating the need to separately program wireless keyboard 120 to work with the particular audio visual device.

Referring still to FIG. 2, plurality of keyboard keys 122 includes a program key 221 and one or more function keys 222. In the illustrated embodiment, wireless keyboard 120 comprises twelve such function keys. Program key 221 is capable of placing wireless keyboard 120 in a programming mode wherein function key 222 may be programmed to perform at least one operation associated with at least one other one of plurality of keyboard keys 122. Such programming of function key 222 may be controlled by software running on the electronic device. Such software may work with program key 221 to cause a programming screen or menu to appear on the electronic device when program key 221 is actuated, and in at least one embodiment, such software may be activated, and/or such program mode may be entered, with a single touch of program key 221.

As an example, function key 222 may be programmed such that a person's name, title, and contact information are inserted into a document when function key 222 is pressed. As another example, function key 222 may be programmed such that a character in a video game ducks, rolls, and then jumps when function key 222 is pressed. Many other possibilities also exist. One of plurality of keyboard keys 122 can be a program lock key, capable of locking wireless keyboard 120 into or out of programming mode.

As illustrated in FIG. 2, plurality of buttons 210 includes a scroll wheel 231, a left mouse button 232, a right mouse button 233, a power button 234, a mute button 235, a force-sensitive resistor 236, a volume control 237, a single function button 238, and a variable function button 239. Scroll wheel 231, left mouse button 232, and right mouse button 233 perform in a manner similar to the corresponding features on a standard computer mouse or similar point-and-click device. In one embodiment, scroll wheel 231 also enables a user of input device 100 to scroll through channels on a television. Power button 234 controls the power status of one or more electronic devices. Mute button 235 and volume control 237 control the level of sound coming from one or more of the electronic devices, mute button 235 either eliminating or allowing such sound, and volume control 237 varying the intensity of such sound.

Force-sensitive resistor 236 controls the movement of a cursor, a game character, or other object in a manner that varies in relation to a force applied to force-sensitive resistor 236. As an example, a cursor in a word processing program moves more slowly when force-sensitive resistor 236 is contacted with a lesser degree of force and more quickly when force-sensitive resistor 236 is contacted with a greater degree of force.

Single function button 238 performs a particular function when wireless keyboard 120 is in the first mode, and performs the identical function, although perhaps with respect to a different electronic device, when wireless keyboard 120 is in the second mode. In the illustrated embodiment, single function buttons 238 create fast-forward, rewind, stop, play, and pause commands, which commands could be performed either on a computer or an audio visual device.

Variable function button 239 performs a particular function when wireless keyboard 120 is in the first mode, and performs a different function when wireless keyboard 120 is in a second mode. Variable function button 239 was referred to in several instances above as "the particular one of plurality of buttons 210."

FIG. 3 is a perspective view of a bottom surface of wireless keyboard 120 according to an embodiment of the invention. As illustrated in FIG. 3, wireless keyboard 120 comprises a lower surface 301, a charging contact 305 located on lower surface 301, and a concave portion 320 capable of receiving keyboard lock feature 115. In addition to holding wireless keyboard 120 more securely in place on charging base 110, concave portion 320 and keyboard lock feature 115 work together to properly align wireless keyboard 120 on charging base 110. In a non-illustrated embodiment, keyboard lock feature 115 may be replaced with or supplemented by a high friction material capable of reducing unwanted movement of wireless keyboard on charging base 110.

Referring again to FIGs. 1 and 2, and still to FIG. 3, charging base 110 further comprises a ledge 116 coupled to and extending from portion 111. Charging contact 114 is located on an upper surface 117 of ledge 116. Charging contact 114 comprises a protrusion 119 and an electrical conductor 141 located on protrusion 119.

Wireless keyboard 120 comprises a region 124 and a region 125. Region 124 extends over ledge 116 when wireless keyboard 120 is on charging base 110 such that charging contact 114 and charging contact 305 are in physical and electrical contact with each other. In the illustrated embodiment, region 124 is elevated above the level of region 125, with a step 126 connecting the two regions.

As illustrated in FIG. 3, charging contact 305 comprises a depression 311 and an electrical conductor 310 located in depression 311. Depression 311 is capable of receiving charging contact 114, including protrusion 119 and electrical conductor 141, such that electrical conductor 141 and electrical conductor 310 make physical and electrical contact with each other when wireless keyboard 120 is located on portion 111 of charging base 110, thus enabling wireless keyboard 120 to be recharged, as further discussed below.

In order to enable wireless communications, wireless keyboard 120 contains an RF transmitter, an antenna, and charge control circuitry. As an example, the antenna can be a 2.4 gigahertz (GHz) trace antenna comprising a copper trace on a circuit board tuned to be an efficient radiator at 2.4GHz. In the same or another embodiment, the antenna runs around a perimeter of wireless keyboard 120. A length of the antenna is chosen based on a frequency of the RF transmitter, whether that frequency is 2.4 GHz or some other frequency. The RF transmitter communicates with an RF receiver inside charging base 110. In one embodiment, the only communication between wireless keyboard 120 and charging base 110 is wireless communication between the RF transmitter and the RF receiver, such that wireless keyboard 120 always communicates wirelessly, even when it is coupled to charging base 110, and such that charging contacts 114 and 305 transfer power but not data. In another embodiment, both power and data are transferred via charging contacts 114 and 305.

Wireless keyboard 120 also contains a rechargeable energy source, such as a rechargeable battery, capable of being recharged when charging contact 114 and charging contact 305 are in contact with each other. Electrical power from an electrical power source is delivered by electrical cable 130 to charging contact 114 and from there through charging contact 305 and finally to the rechargeable energy source. Wireless keyboard 120 further comprises a radio reset button 330, for synchronizing the RF transmitter and RF receiver, a battery door 340 allowing access to the rechargeable battery, and an IR window 350 that allows the IR signals to leave wireless keyboard 120 and communicate with the one or more electronic devices.

As alluded to briefly above, plurality of keyboard keys 122 are capable of providing input to the one or more electronic devices while the rechargeable energy source is being recharged. This is possible because the performance of the RF transmitter, the RF receiver, and the charge control circuitry is the same whether power is provided by the rechargeable batteries or by charging base 110 (via electrical cable 130). In other words, the operation of wireless keyboard 120 when wireless keyboard 120 receives power from the rechargeable battery is substantially similar to the operation of wireless keyboard 120 when wireless keyboard 120 receives power via electrical cable 130. Plurality of keyboard keys 122 are further capable of providing input to the one or more electronic devices while the rechargeable energy source is being recharged because of the mechanical design of input device 100. For example, portion 111 of charging base 110 provides a flat surface capable of supporting wireless keyboard 120 in an easily usable orientation and position. Furthermore, charging base 110 has a low profile without sidewalls or other features that would block access to wireless keyboard 120.

Portion 112 of charging base 110 further comprises one or more indicators 118 capable of indicating a status of wireless keyboard 120. As an example, indicator 118 can be a light-emitting diode or the like. Indicator 118 can indicate whether or not wireless keyboard 120 is in the first mode or the second mode, is in programming mode, is being recharged, is in number lock mode, or the like.

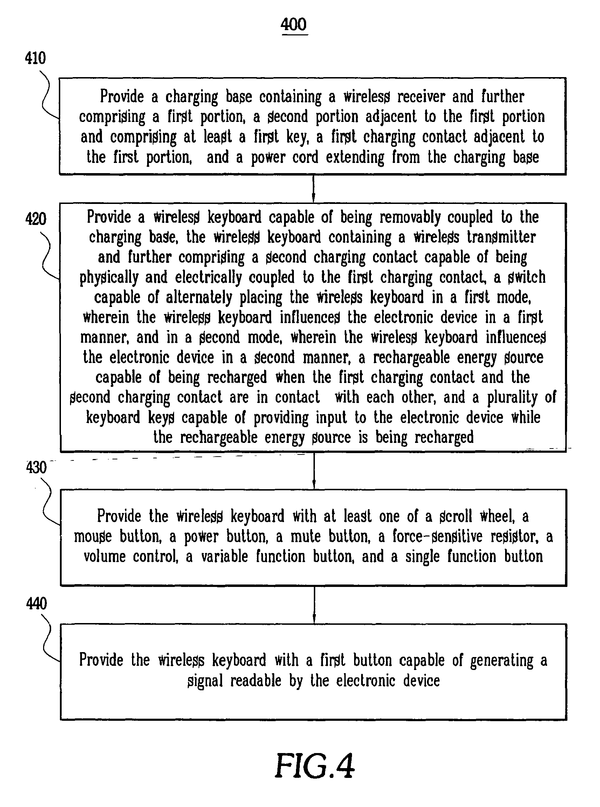

FIG. 4 is a flow chart illustrating a method 400 of manufacturing an input device capable of providing input to an electronic device, according to an embodiment of the invention. A step 410 of method 400 is to provide a charging base containing a wireless receiver and further comprising a first portion, a second portion adjacent to the first portion and comprising at least a first key, a first charging contact adjacent to the first portion, and an electrical cable extending from the charging base. As an example, the charging base can be similar to charging base 110, first shown in FIG. 1. As a further example, the first portion, the second portion, the first key, the first charging contact, and the electrical cable can be similar to, respectively, portion 111, portion 112, one of plurality of keys 113, charging contact 114, and electrical cable 130, all of which were first shown in FIG. 1.

A step 420 of method 400 is to provide a wireless keyboard capable of being removably coupled to the charging base, the wireless keyboard containing a wireless transmitter and further comprising a second charging contact capable of being physically and electrically coupled to the first charging contact, a switch capable of alternately placing the wireless keyboard in a first mode, wherein the wireless keyboard influences the electronic device in a first manner, and in a second mode, wherein the wireless keyboard influences the electronic device in a second manner, a rechargeable energy source capable of being recharged when the first charging contact and the second charging contact are in contact with each other, and a plurality of keyboard keys capable of providing input to the electronic device while the rechargeable energy source is being recharged. As an example, the wireless keyboard can be similar to wireless keyboard 120, first shown in FIG. 1. As a further example, the second charging contact, the switch, and the plurality of keyboard keys can be similar to, respectively, charging contact 305, first shown in FIG. 3, and switch 123 and plurality of keyboard keys 122, both of which were first shown in FIG. 1.

A step 430 of method 400 is to provide the wireless keyboard with at least one of a scroll wheel, a mouse button, a power button, a mute button, a force-sensitive resistor, a volume control, a variable function button, and a single function button. As an example, the scroll wheel, the mouse button, the power button, the mute button, the force-sensitive resistor, the volume control, the variable function button, and the single function button can be similar to, respectively, scroll wheel 231, left mouse button 232 and or right mouse button 233, power button 234, mute button 235, force-sensitive resistor 236, volume control 237, variable function button 239, and single function button 238, all of which were first referenced in FIG. 2.

A step 440 of method 400 is to provide the wireless keyboard with a first button capable of generating a signal readable by the electronic device. As an example, the first button can be similar to any one of variable function buttons 239, first referenced in FIG. 2, in that the signal generated by the first button influences the electronic device in the first manner when the wireless keyboard is in the first mode, and influences the electronic device in the second manner when the wireless keyboard is in the second mode.

Although the invention has been described with reference to specific embodiments, it will be understood by those skilled in the art that various changes may be made without departing from the spirit or scope of the invention. Various examples of such changes have been given in the foregoing description. Accordingly, the disclosure of embodiments of the invention is intended to be illustrative of the scope of the invention and is not intended to be limiting. It is intended that the scope of the invention shall be limited only to the extent required by the appended claims. For example, to one of ordinary skill in the art, it will be readily apparent that the input device discussed herein may be implemented in a variety of embodiments, and that the foregoing discussion of certain of these embodiments does not necessarily represent a complete description of all possible embodiments.

All elements claimed in any particular claim are essential to the invention claimed in that particular claim. Consequently, replacement of one or more claimed elements constitutes reconstruction and not repair. Additionally, benefits, other advantages, and solutions to problems have been described with regard to specific embodiments. The benefits, advantages, solutions to problems, and any element or elements that may cause any benefit, advantage, or solution to occur or become more pronounced, however, are not to be construed as critical, required, or essential features or elements of any or all of the claims.

Moreover, embodiments and limitations disclosed herein are not dedicated to the public under the doctrine of dedication if the embodiments and/or limitations: (1) are not expressly claimed in the claims; and (2) are or are potentially equivalents of express elements and/or limitations in the claims under the doctrine of equivalents.

## Claims

1. An input device capable of providing input to an electronic device, the input device comprising:
a charging base; and
a wireless keyboard capable of being removably coupled to the charging base,
wherein:
the charging base comprises:
a first portion for receiving the wireless keyboard;
a second portion adjacent to the first portion and comprising at least a first key; and
a first charging contact adjacent to the first portion; and
the wireless keyboard comprises:
a second charging contact capable of being physically and electrically coupled to the first charging contact;
a plurality of keyboard keys; and
a switch capable of alternately placing the wireless keyboard in a first mode and in a second mode.

2. The input device of claim 1 wherein:
the wireless keyboard further comprises at least a first button capable of generating a signal readable by the electronic device;
the signal generated by the first button influence the electronic device in a first manner when the wireless keyboard is in the first mode; and
the signal generated by the first button influences the electronic device in a second manner when the wireless keyboard is in the second mode.

3. The input device of claim 2, or the system of claim 10, wherein:
the first portion of the charging base comprises a keyboard lock feature.

4. The input device or system of claim 3 wherein:
the keyboard lock feature comprises a convex ridge; and
the wireless keyboard comprises a lower surface comprising a concave portion capable of receiving the convex ridge.

5. The input device of any preceding claim wherein:
the plurality of keyboard keys includes a program key and at least a first function key;
each one of the plurality of keyboard keys is associated with at least one operation; and
the program key is capable of placing the wireless keyboard in a programming mode wherein the first function key may be programmed to perform at least one operation associated with at least one other one of the plurality of keyboard keys; or
the system of claim 10 or of claim 3 or claim 4, wherein:
the plurality of keyboard keys includes a program key; and
the program key is capable of placing the wireless keyboard in a programming mode wherein a first one of the plurality of keyboard keys may be programmed to perform a function associated with at least one other one of the plurality of keyboard keys.

6. The input device of any preceding claim wherein:
the wireless keyboard comprises a plurality of buttons capable of generating a signal readable by the electronic device; and
at least one of the plurality buttons influences the electronic device when the wireless keyboard is in the second mode and does not influence the electronic device when the wireless keyboard is in the first mode.

7. The input device of claim 6 wherein:
the charging base further comprises a ledge coupled to and extending from the first portion;
the first charging contact is located on an upper surface of the ledge;
the wireless keyboard comprises a first region and a second region;
the second charging contact is located on a lower surface of the first region; and
the first region extends over the ledge when the wireless keyboard is on the charging base such that the first charging contact and the second charging contact are in physical and electrical contact with each other.

8. The input device of any preceding claim, or the system of claim 10 or any claim dependent directly or indirectly from claim 10, wherein:
the second portion of the charging base further comprises at least a first indicator capable of indicating a status of the wireless keyboard.

9. The input device of any preceding claim, or of claim 17 or any claim dependent directly or indirectly from claim 17, wherein:
the wireless keyboard further comprises at least one feature selected from the group consisting of: a scroll wheel; a mouse button; a power button; a mute button; a force-sensitive resistor; a volume control; a variable function button; and a single function button; or
the system of claim 10 or any claim dependent directly or indirectly from claim 10 wherein:
the wireless keyboard further comprises at least one feature selected from the group consisting of: a scroll wheel; a mouse button; a power button; a mode switch; a mute button; a force-sensitive resistor; a volume control; a variable function button; and a single function button.

10. A control system capable of providing input to an electronic device, the control system comprising:
a charging base; and
a wireless keyboard capable of being removably coupled to the charging base, wherein:
the charging base comprises:
a first portion for receiving the wireless keyboard;
a second portion adjacent to the first portion and comprising at least a first key;
a first charging contact adjacent to the first portion; and
an electrical cable extending from the charging base;
the wireless keyboard comprises:
a second charging contact capable of being physically and electrically coupled to the first charging contact;
a plurality of keyboard keys; and
a rechargeable energy source capable of being recharged when the first charging contact and the second charging contact are in contact with each other; and
the plurality of keyboard keys are capable of providing input to the electronic device while the rechargeable energy source is being recharged.

11. The control system of claim 10 or of any claim dependent directly or indirectly from claim 10, wherein:
the wireless keyboard further comprises:
at least a first button capable of generating a signal readable by the electronic device; and
a switch capable of alternately placing the wireless keyboard in a first mode and in a second mode;
the signal generated by the first button influences the electronic device in a first manner when the wireless keyboard is in the first mode; and
the signal generated by the first button influences the electronic device in a second manner when the wireless keyboard is in the second mode.

12. The control system of claim 11 wherein:
the wireless keyboard comprises a plurality of buttons, including the first button, capable of generating a signal readable by the electronic device; and
at least one of the plurality of buttons influences the electronic device when the wireless keyboard is in the second mode and does not influence the electronic device when the keyboard is in the first mode.

13. The control system of claim 8 wherein:
the first indicator indicates whether the wireless keyboard is in the first mode or in the second mode.

14. The control system of claim 10 or any claim dependent directly or indirectly from claim 10, wherein:
the charging base further comprises a ledge coupled to and extending from the first portion; and
the first charging contact comprises a protrusion located on an upper surface of the ledge.

15. The control system of claim 14 wherein:
the wireless keyboard comprises a lower surface having a depression therein;
the second charging contact is located in the depression; and
the depression is capable of receiving the protrusion on the upper surface of the ledge.

16. The control system of claim 15 wherein:
the first charging contact further comprises a first electrical conductor located on the protrusion;
the second charging contact further comprises a second electrical conductor located in the depression; and
the first electrical conductor and the second electrical conductor make physical and electrical contact with each other when the wireless keyboard is located on the first portion of the charging base.

17. An input device capable of providing input to a first electronic device and to a second electronic device, the input device comprising:
a charging base; and
a wireless keyboard capable of being removably coupled to the charging base, wherein:
the charging base comprises:
a first portion for receiving the wireless keyboard;
a second portion adjacent to the first portion and comprising a plurality of keys;
a first charging contact adjacent to the first portion; and
an electrical cable for supplying electrical power to the charging base and to the wireless keyboard;
the wireless keyboard comprises:
a rechargeable battery capable of providing electrical power to the wireless keyboard;
a second charging contact capable of being physically and electrically coupled to the first charging contact;
a plurality of buttons capable of generating a signal readable by the first electronic device or the second electronic device;
a plurality of keyboard keys; and
a switch capable of alternately placing the wireless keyboard in a first mode, in which the wireless keyboard is capable of communicating with the first electronic device, and a second mode, in which the wireless keyboard is capable of communicating with the second electronic device; and
an operation of the wireless keyboard when the wireless keyboard receives power from the rechargeable battery is substantially similar to an operation of the wireless keyboard when the wireless keyboard receives power via the electrical cable.

18. The input device of claim 17 wherein:
the charging base further comprises a ledge coupled to and extending from the first portion;
the first charging contact comprises a protrusion located on an upper surface of the ledge;
the wireless keyboard comprises a first region and a second region;
the plurality of buttons are located at the first region and the plurality of keyboard keys are located at the second region;
the wireless keyboard comprises a lower surface having a depression therein;
the second charging contact is located in the depression; and
the first region extends over the ledge when the wireless keyboard is on the charging base such that the depression receives the protrusion and such that the first charging contact and the second charging contact are in physical and electrical contact with each other.

19. A method of manufacturing an input device capable of providing input to an electronic device, the method comprising:
providing a charging base containing a wireless receiver and further comprising:
a first portion;
a second portion adjacent to the first portion and comprising at least a first key;
a first charging contact adjacent to the first portion; and
an electrical cable extending from the charging base; and
providing a wireless keyboard capable of being removably coupled to the charging base, the wireless keyboard containing a wireless transmitter and further comprising:
a second charging contact capable of being physically and electrically coupled to the first charging contact;
a switch capable of alternately placing the wireless keyboard in a first mode, wherein the wireless keyboard influences the electronic device in a first manner, and in a second mode, wherein the wireless keyboard influences the electronic device in a second manner;
a rechargeable energy source capable of being recharged when the first charging contact and the second charging contact are in contact with each other; and
a plurality of keyboard keys capable of providing input to the electronic device while the rechargeable energy source is being recharged.

20. The method of claim 19 further comprising:
providing the wireless keyboard with at least one of: a scroll wheel; a mouse button; a power button; a mute button; a force-sensitive resistor; a volume control; a variable function button; and a single function button.

21. The method of claim 19 or claim 20 further comprising:
providing the wireless keyboard with a first button capable of generating a signal readable by the electronic device,
wherein:
the signal generated by the first button influences the electronic device in the first manner when the wireless keyboard is in the first mode; and
the signal generated by the first button influences the electronic device in the second manner when the wireless keyboard is in the second mode.

22. The method of any one of claims 19 to 21 wherein:
providing a wireless keyboard comprises:
providing a wireless keyboard capable of operating in a substantially similar manner whether receiving power from the rechargeable energy source or via the electrical cable.
